# EUROPÄISCHE PATENTSCHRIFT

(11) **EP 2 714 386 B1**
(45) Veröffentlichungstag und Bekanntmachung des Hinweises auf die Patenterteilung: **06.05.2015**
(21) Anmeldenummer: 12737192.0
(22) Anmeldetag: 25.05.2012
(51) Int. Cl.: B32B 15/14, B64D 45/02, B29C 70/88

(54) **VERFAHREN ZUR HERSTELLUNG EINER OBERFLÄCHENSTRUKTUR MIT BLITZSCHUTZ SOWIE DAMIT HERSTELLBARE OBERFLÄCHENSTRUKTUR**
METHOD FOR PRODUCING A SURFACE STRUCTURE WITH LIGHTNING PROTECTION, AND SURFACE STRUCTURE WHICH CAN BE PRODUCED IN THIS WAY
PROCÉDÉ DE PRODUCTION D'UNE STRUCTURE DE SURFACE MUNIE D'UNE PROTECTION CONTRE LA FOUDRE AINSI QUE STRUCTURE DE SURFACE POUVANT ÊTRE PRODUITE PAR LEDIT PROCÉDÉ

(30) Priorität: 27.05.2011 DE 102011103334; 07.09.2011 DE 102011112518
(43) Veröffentlichungstag der Anmeldung: 09.04.2014
(73) Patentinhaber: Airbus Defence and Space GmbH, 85521 Ottobrunn (DE)
(72) Erfinder: STEINWANDEL, Jürgen, 88690 Uhldingen (DE); ENGLHART, Martin, 83104 Schönau (DE); JONKE, Dietrich, P., 82024 Taufkirchen (DE); PIRINGER, Helmut, 85598 Baldham (DE); WULBRAND, Wilhelm, 88677 Markdorf (DE)
(86) Internationale Anmeldenummer: PCT/DE2012/000548
(87) Internationale Veröffentlichungsnummer: WO 2012/163325

(56) Entgegenhaltungen:
- EP-A1- 1 484 245
- EP-A2- 0 248 122
- EP-A2- 0 629 549
- WO-A2-2010/135318
- US-A- 4 824 713

## Beschreibung

Die Erfindung betrifft ein Verfahren zur Herstellung einer Oberflächenstruktur mit Blitzschutzeinrichtung. Außerdem betrifft die Erfindung ein Fahrzeugbauteilherstellverfahren zum Herstellen eines Bauteils eines Fahrzeuges unter Verwendung des Oberflächenstrukturherstellverfahrens zum Bereitstellen einer Oberflächenstruktur dieses Bauteils. Schließlich betrifft die Erfindung eine mit einem solchen Verfahren herstellbare Oberflächenstruktur sowie ein eine solche Oberflächenstruktur aufweisendes Fahrzeugbauteil.

Die Erfindung betrifft insbesondere die Herstellung von Schichtsystemen zum Blitzschutz von Bauteilen. Insbesondere finden solche Bauteile in der Luft- und Raumfahrttechnik Anwendung, z.B. in Flugzeugen oder Hubschraubern. Erfindungsgemäße Oberflächenstrukturen können aber auch bei anderen Fahrzeugen oder bei sonstigen blitzgefährdeten Objekten, wie z.B. Bauwerken oder Windkraftanlagen, eingesetzt werden.

Bekannte Schichtsysteme sind beispielsweise in der US 4 155 896 sowie insbesondere der DE 10 2006 046 002 B4 offenbart. In diesem Patent ist außerdem der technologische Hintergrund zum Blitzschutz näher erläutert. Es wird für weitere Einzelheiten zu diesem technologischen Hintergrund ausdrücklich auf die DE 10 2006 046 002 B4 sowie den gesamten darin zitierten Stand der Technik verwiesen.

Verfahren zur Herstellung von Schichtsystemen mit Blitzschutz, insbesondere für Luftfahrzeuge, bei denen eine Tragstruktur auf der Basis eines Faserverbundwerkstoffes vorgesehen wird, sind aus der EP 0 629 549 A2, EP 1 484 245 A1, WO 2010/135318 A2, US 4 824 713 A und EP 0 248 122 A2 bekannt.

Das Problem des Blitzschutzes besteht insbesondere bei Bauteilen aus Kunststoff oder bei Bauteilen, die Kunststoff-Strukturen enthalten. Beispielsweise kommen solche Kunststoff-Strukturen in der Luftfahrttechnik in Form von Kunststoff-Verbundwerkstoffen zum Einsatz. Verbundwerkstoffe aus Kunststoff, insbesondere kohlenstofffaserverstärkte Kunststoffe (CFK), haben den Vorteil, dass sie leichtgewichtig sind und dennoch sehr gute mechanische Eigenschaften, wie z.B. eine hohe Festigkeit aufweisen. Sie können in einfacher Weise auch in ungewöhnliche unregelmäßige Formen gebracht werden. Daher ist der Einsatz von derartigen faserverstärkten Verbundwerkstoffen insbesondere für die Luftfahrttechnik interessant und wird dort in Zukunft in größerem Maße eingesetzt.

Der geplante Einsatz größerer Strukturen in CFK-Bauweise in der Luftfahrttechnik erfordert unter anderem einen wirksamen Schutz gegenüber Blitzeinschlag. Die physikalischen Vorgänge beim Blitzeinschlag sind bei CFK-Strukturen im Wesentlichen analog zu jeden bei metallischen Strukturen. Es kommt zur Ausbildung eines Vorentladungs-Plasmakanals und im weiteren Verlauf zur Blitzentladung. Je nach Lage des Erstberührungspunktes wird der Blitzkanal über die Luftzeugoberfläche gezogen. Mit der Berührung vom Blitzkanal und Flugzeugoberfläche ist ein hoher Stromfluss und Wärmeeintrag in die betreffende Struktur verbunden. Die Parameter, die die Intensität des Blitzes charakterisieren, unterscheiden sich nicht zwischen CFK-Strukturen und metallischen Bauteilen. Da die Wärmeleitfähigkeit und elektrische Leitfähigkeit von CFK-Strukturen deutlich geringer ausfällt als die von Metallen, ist es bei im Außenraum einzusetzenden CFK-Strukturen vorteilhaft, einen Blitzschutz vorzusehen. Ansonsten könnte bei Blitzeinschlag eine erhebliche Delamination mit einhergehender Festigkeitseinbuße die Folge sein.

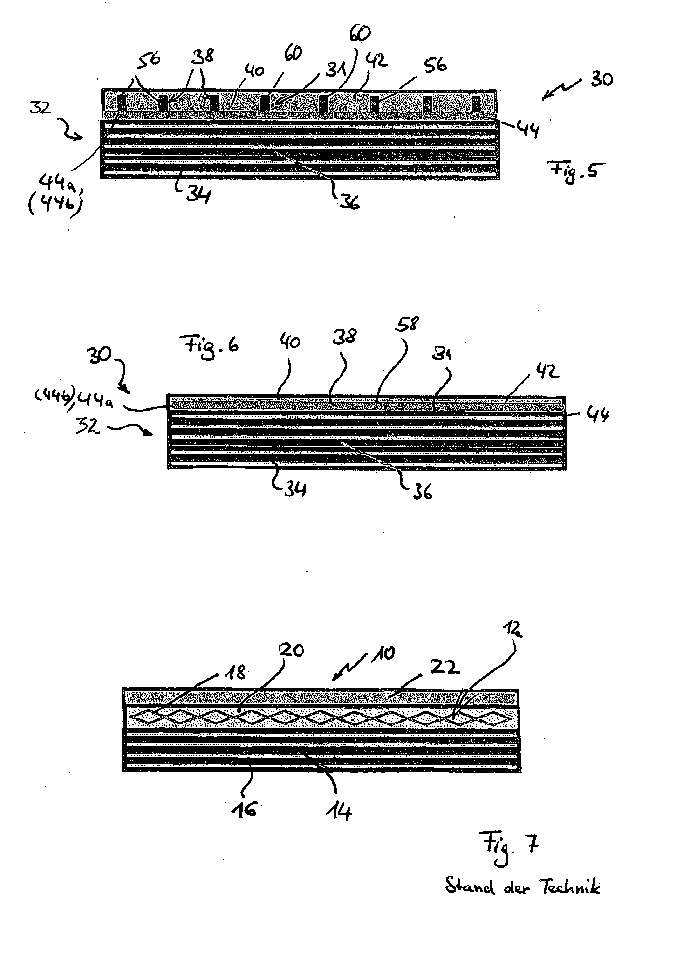

Fig. 7 zeigt eine Oberflächenstruktur 10 in Form eines Schichtsystems 12 gemäß einem bei Luftfahrzeugen derzeit in der Praxis eingesetzten Stand der Technik. Das Schichtsystem 12 weist eine Tragstruktur 14 auf der Basis eines faserverstärkten Kunststoffes, insbesondere eine Tragstruktur 14 mit einer CFK-Struktur 16, auf. In der Praxis werden zum Schutz solcher CFK-Strukturen gegen Schädigung bei Blitzeinschlag derzeit nahezu ausnahmslos Gitterstrukturen und Netzstrukturen aus Metallen eingesetzt. Die Fig. 7 zeigt hierzu ein Kupferdrahtnetz 18, welches in eine Kunststoffmatrix 20 aus dem gleichen Kunststoffmaterial wie die CFK-Struktur 16 eingebettet ist. Demnach ist eine Gitterstruktur oder Netzstruktur aus Metall als äußere Lage in die CFK-Struktur 16 einlaminiert. Darüber ist eine Deckschicht aus Decklack 22 aufgebracht.

Insbesondere bei größeren Strukturbauteilen handelt es sich bei der Herstellung solcher bekannter Schichtsysteme 12 um eine verfahrenstechnisch aufwändige Methode, die mit signifikanten Gewichtsbelastungen verbunden ist.

Ein Beispiel für eine ähnliche Oberflächenstruktur ist in der US 2011/0174522 A1 offenbart. Diese Druckschrift betrifft ein Prepreg, welches aus nicht-leitenden Faserstrukturen und einer Gewebestruktur aus leitenden Fasern gebildet ist. Die Fasern sind in Harz eingebettet; aus einem derartigen Prepreg lässt sich ein Verbundbauteil aufbauen.

Eine ähnliche Oberflächenstruktur ist aus der US 2007/0141927 A1 bekannt. Hierbei wird auf einer Tragstruktur 20 eine Isolatorschicht, darauf ein Metallgittermaterial, wie beispielsweise eine expandierte Aluminiumfolie, aufgelegt und dann die Oberfläche durch Spachtelmaterialien und Finishern, wie z.B. Decklacken, überdeckt.

In der US 2009/0227162 A1 ist dagegen offenbart, Partikel, wie z.B. Metallpartikel, zusammen mit Nano-Fasern und Nano-Röhren in Decklacke oder Farben einzumischen, um hierdurch elektrisch leitfähige Oberflächenstrukturen auf Faserverbundwerkstoffen durch Sprühauftrag zu erzeugen. Bei einer anderen Ausgestaltung werden elektrisch leitfähige Schichten als Folien, papierähnliche Strukturen oder Vlies-Strukturen entsprechend eingebettet in Matrixmaterialien vorgefertigt und diese Strukturen dann auf Faserverbundmaterialien aufgelegt. Demgegenüber werden Strukturen gemäß der US 4 155 896 dadurch mit leitfähigen Schichten versehen, dass Aluminiumfasern in Decklacke oder dergleichen zugemischt werden und anschließend in einem elektrischen Feld ausgerichtet werden.

Bei den zuvor erwähnten Druckschriften soll der Blitzschutz allein dadurch erreicht werden, dass elektrisch leitfähige Schichten vorgesehen sind, die die Energie verteilen sollen. Dies hat sich nicht in allen Fällen als ausreichend herausgestellt.

Eine Verbesserung demgegenüber beschreibt die DE 10 2006 046 002 B4. Bei der daraus bekannten Schichtstruktur sind polarisierbare, elektrisch leitfähige, längliche Partikel in der Deckschicht eingebracht und dort in Dickenrichtung ausgerichtet, um als Blitzzündelemente zu dienen. Es wird für weitere Einzelheiten hierzu auf die DE 10 2006 046 002 B4 verwiesen.

Die Ausrichtung ist notwendig, um einen ausreichenden Blitzschutz zu erreichen.

Zur Herstellung wird derart vorgegangen, dass der Decklack zunächst mit den Partikeln vermischt wird und dann auf die Tragstrukturen aufgebracht wird. Noch während der Lack flüssig ist, wird ein elektrisches Feld angelegt, um die polarisierbaren Partikel entsprechend in Dickenrichtung der Schicht auszurichten. Das Anlegen eines elektrischen Feldes, das für die komplette Ausrichtung der Partikel stark genug ist, stellt sich insbesondere bei komplizierten Oberflächenstrukturen als problematisch und aufwändig dar. Die gewünschte Ausrichtung lässt sich teils nur unzureichend und schwierig erreichen.

Aufgabe der Erfindung ist es demnach, ein Verfahren zum Herstellen von Oberflächenstrukturen mit Blitzschutz bereitzustellen, das einfacher durchzuführen ist und mit dem ein verbesserter Blitzschutz erzielbar ist.

Diese Aufgabe wird durch ein Verfahren gemäß Anspruch 1 gelöst.

Vorteilhafte Verwendungen des Verfahrens sowie damit herstellbare Strukturen sind Gegenstand der Nebenansprüche.

Vorteilhafte Ausgestaltungen der Erfindung sind Gegenstand der Unteransprüche.

Die Erfindung schafft ein Verfahren zur Herstellung einer Oberflächenstruktur mit Blitzschutzeinrichtung mit den Schritten:
a) Vorsehen einer Tragstruktur auf der Basis eines faserverstärktem Verbundwerkstoffs,
b) Aufbringen wenigstens einer Blitzschutzmaterialanordnung aus oder mit einem leitenden Material auf die Tragstruktur, so dass diese auf der Tragstruktur lagefixiert anhaftet,
c) Aufbringen eines Deckmaterials so, dass es die auf der Tragstruktur lagefixierte wenigstens eine Blitzschutzmaterialanordnung einbettet, und
d) Verfestigen des aufgebrachten Deckmaterials.

Erfindungsgemäß ist vorgesehen, dass die Blitzschutzmaterialanordnung durch eine Anordnung elektrisch leitfähiger Partikel als Blitzzündelemente gebildet wird, die auf der Tragstruktur vor dem Einbetten in das Deckmaterial lagefixiert werden.

Durch das Aufbringen der Blitzschutzeinrichtung vor dem diese einbettenden Deckmaterial lässt sich die gewünschte Verteilung, Anordnung und/oder Ausbildung des Blitzschutzmaterials erreichen und lagefixieren. Das Aufbringen und Verfestigen des Deckmaterials bettet dann die gewünschte Blitzschutzmaterialanordnung passend ein und stabilisiert diese.

Die Blitzschutzmaterialanordnung ist aus einzelnen Partikeln gebildet ist, die beispielsweise als Blitzzündelemente wirken sollen; dabei lassen sich diese Partikel und deren Verteilung vorher entsprechend festlegen. Durch die Vorfixierung ist zumindest ein Ende der Partikel bereits richtig lagefixiert, so dass auch die Ausrichtung der Partikel entsprechend besser vorbestimmbar ist.

Das Deckmaterial ist vorzugsweise zum Bilden einer gegen Umwelteinflüsse geeigneten äußeren Deckschicht geeignet. Es kann beispielsweise ein vorzugsweise hochstabiles thermoplastisches Material sein. In einer bevorzugten Ausgestaltung ist als Deckmaterial ein Polyetherketon, beispielsweise ein Polyether-Etherketon (PEEK), eingesetzt. Solche Materialien sind einerseits gut formbar, andererseits im flüssigen Zustand aufbringbar und dennoch ausreichend temperatur- und wetterfest sowie widerstandsfähig gegen äußere mechanische Einflüsse.

Vorzugsweise werden die als Partikel ausgebildeten Blitzschutzmaterialien der Blitzschutzmaterialanordnung unmittelbar oder mittelbar auf die Tragstruktur aufgeklebt. Die Blitzschutzmaterialien können leitfähig verbunden sein und mit einer leitfähigen Struktur, insbesondere zum Ableiten von Spannungen, verbunden sein. Zum Zünden des Blitzes sind gemäß der in der DE 10 2006 046 002 B4 erläuterten Bemerkungen zum technologischen Hintergrund auch isolierte, beispielsweise polarisierbare, Partikel geeignet. Daher können die Partikel auch vollständig von nicht leitenden Materialien umgeben sein.

Demnach ist bei einer vorteilhaften Ausgestaltung des Verfahrens vorgesehen, dass Schritt b) umfasst:
b1) Aufkleben der wenigstens einen Blitzschutzmaterialanordnung mittels eines Klebers auf der Tragstruktur.

Schritt b1) umfasst gemäß einer weiteren vorteilhaften Ausgestaltung:
b1a) flächiges Auftragen des Klebers auf der Tragstruktur zum Bilden einer durchgängigen Klebefläche oder
b1 b) bereichsweises Auftragen des Klebers auf der Tragstruktur zum Bilden von mehreren Klebebereichen oder
b1 c) punktuelles Auftragen des Klebers auf der Tragstruktur.

Weitere Ausgestaltungen sind dadurch gekennzeichnet, dass der in Schritt b1) aufzutragende Kleber ein elektrisch leitfähiger Kleber oder ein elektrisch nicht leitfähiger Kleber ist.

Die Partikel können polarisierbare Partikel sein. Vorzugsweise sind die Partikel länglich ausgebildet. Z.B. können die Partikel gebildet sein durch Fasern, insbesondere Kurzfasern, und mehr insbesondere durch Kohlenstofffasern. Möglich wären auch kleine Röhren, wie beispielsweise Nanoröhren, insbesondere Kohlenstoffnanoröhren. Es ist aber auch die Verwendung von Splittern, wie beispielsweise Siliziumkarbidsplittern, Graphitsplittern oder Metallsplittern, oder die Verwendung stiftförmiger Partikel, wie beispielsweise Metallstifte, möglich. Werden Splitter verwendet, so haben diese vorzugsweise wenigstens ein spitzes Ende, das von der Tragstruktur vorstehend wegzurichten ist.

In einer weiteren Ausgestaltung kann die Blitzschutzmaterialanordnung auch durch Aufsprayen oder Aufsprühen von einzelnen Metallstiften auf die Tragstruktur hergestellt werden.

Die Metallstifte können z.B. aus irgendeinem geeigneten Metallpulver, wie insbesondere Aluminiumpulver, erzeugt werden.

Die Blitzschutzmaterialanordnung wird vorzugsweise auf einer CFK-Struktur als Tragstruktur aufgebracht.

Demgemäß ist bei einer bevorzugten Ausgestaltung des Verfahrens vorgesehen, dass Schritt a) die Herstellung eines flächigen Bauteilsubstrat aus einem CFK-Verbundmaterial, insbesondere aus einen mit Kohlenstofffasern verstärkten Epoxidharz, umfasst.

Es kann vorteilhaft sein, zwischen die Blitzschutzmaterialanordnung und die Tragstruktur eine Schutzschicht, insbesondere gegen Temperaturbeanspruchung, vorzusehen, diese kann beispielsweise durch ein Vlies aus leitenden und/oder nicht leitenden Fasern gebildet werden.

Vorzugsweise weist die Zwischenschicht ein nicht gewebtes Fasergebilde auf.

Im Folgenden wird die Erfindung anhand der beigefügten Zeichnungen näher erläutert. Dabei zeigen:
- Fig. 1: eine schematische Darstellung einer ersten Ausführungsform einer Öberflächenstruktur mit Blitzschutz;
- Fig. 2: eine schematische Darstellung einer zweiten Ausführungsform einer Oberflächenstruktur mit Blitzschutz;
- Fig. 3: eine schematische Darstellung einer dritten Ausführungsform einer Oberflächenstruktur mit Blitzschutz;
- Fig. 4: eine schematische Darstellung einer vierten Ausführungsform einer Oberflächenstruktur mit Blitzschutz;
- Fig. 5: eine schematische Darstellung einer fünften Ausführungsform einer Oberflächenstruktur mit Blitzschutz;
- Fig. 6: eine schematische Darstellung einer sechsten Ausführungsform einer Oberflächenstruktur mit Blitzschutz; und
- Fig. 7: eine schematische Darstellung einer Oberflächenstruktur mit Blitzschutz gemäß dem Stand der Technik.

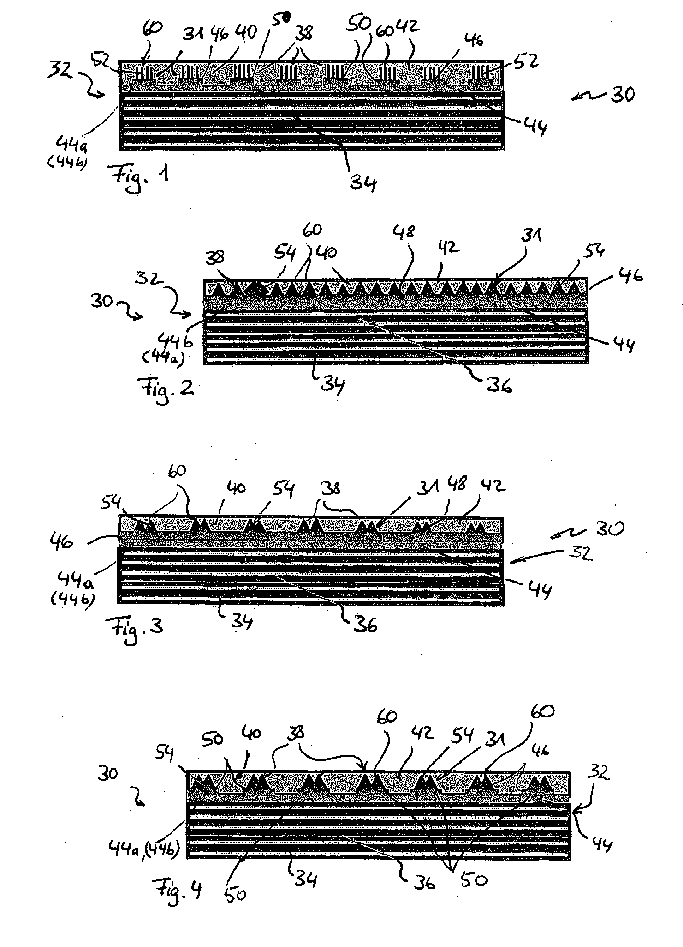

Im folgenden werden verschiedene Ausführungsformen von Oberflächenstrukturen 30 mit Blitzschutzeinrichtung 31 sowie vorteilhafte Verfahren zur Herstellung solcher Oberflächenstrukturen 30 anhand der Darstellungen in den Fig. 1 bis 6 näher erläutert.

Die Oberflächenstrukturen 30 sind als Schichtsysteme 32 aufgebaut. Sie weisen eine Tragstruktur 34 aus einem Verbundmaterial auf, wobei die Tragstruktur 34 eine CFK-Struktur 36 beinhaltet. Die Blitzschutzeinrichtung 31 ist durch eine Blitzschutzmaterialanordnung 38 gebildet, die in eine Deckschicht 40 aus einem Schutz gegen Umwelteinflüsse bietenden Deckmaterial in Form eines Decklackes 42, insbesondere aus PEEK, eingebettet sind.

Zur Herstellung der Oberflächenstrukturen 30 wird derart vorgegangen, dass zunächst die Tragstruktur 34 hergestellt und bereitgestellt wird und dann die Blitzschutzmaterialanordnung 38 auf diese Tragstruktur 34 angeordnet und lagefixiert wird.

Hierzu wird bei den gezeigten Ausführungsformen der Fig. 1 bis 6 zunächst die Tragstruktur 34 mit einer Schutzschicht 43 versehen. Die Schutzschicht 43 weist insbesondere ein Vlies 44 auf. Das Vlies 44 ist optional und kann bei Bedarf weggelassen werden. Allgemein weist die optionale Schutzschicht 43 vorzugsweise ein textiles Flächengebilde auf, das aus elektrisch leitfähigen Fasern oder aus elektrisch nicht leitfähigen Fasern gebildet ist.

Das Vlies 44 ist ein nicht gewebtes Fasergebilde aus Fasern, die zum Bilden eines leitenden Untergrundes aus leitfähigem Material oder zum Bilden eines nicht leitfähigen Untergrundes aus nicht leitfähigen Fasermaterialien gefertigt sein könnten. Beispielsweise kann ein Kohlenstoffvlies 44a zum Bilden einer leitfähigen Schicht oder ein Glasfaservlies 44b zum Bilden einer nicht leitenden Schicht aufgebracht werden. Das Kohlenstoffvlies 44a kann beispielsweise ein unter dem Handelsnamen SIGRATEK ® erhältliches Vlies sein.

Die Schutzschicht 43 weist weiter ein Kunststoffmaterial zum Einbetten des Vlieses 44 auf. Geeignete Materialien sind thermoplastische Harze, z.B. PPS oder PAA.

Bei den Ausführungsformen gemäß den Fig. 1 bis 4 wird ein Kleber 46 flächig (Fig. 2 und Fig. 3) oder bereichsweise (Fig. 1 oder Fig. 4), insbesondere punktuell, auf die Tragstruktur 43, insbesondere die Schutzschicht 43, aufgetragen. Hierdurch bildet sich eine Klebstoffschicht 48 bei dem flächigen Auftrag; oder es sind Klebstoffbereiche 50, insbesondere Klebstoffpunkte, vorgesehen.

Bei den Ausführungsformen gemäß den Fig. 1 bis 4 werden zum Bilden der Blitzschutzmaterialanordnung 38 Partikel aus leitfähigen Materialien in Form von kurzen Kohlenstofffasern 52 oder alternativ auch Nanotubes (nicht dargestellt) oder in Form von Splittern 54 aus leitfähigem Material auf den Kleber 46 aufgebracht und durch diesen fixiert.

Bei den Splittern 54 handelt es.sich beispielsweise um Siliziumkarbid-Kornsplitter aus Silizium-infiltriertem Siliziumkarbid (Si/SiC). Alternativ sind Graphitsplitter möglich.

Bei der Ausführungsform gemäß Fig. 5 wird die Blitzschutzmaterialanordnung 38 ebenfalls durch Partikel ausgebildet. Zum Bilden dieser Partikel werden jedoch einzelne Metallstifte 56 auf die Tragstruktur 34, gegebenenfalls auf das Vlies 44, aufgesprüht. Die Metallstifte 56 werden beispielsweise aus irgendeinem geeigneten Metallpulver, wie z.B. aus Aluminiumpulver, gebildet. Das Aufsprühen erfolgt derart, dass die Metallstifte 56 auf der Tragstruktur 34 anhaften.

Bei der Ausführungsform gemäß Fig. 6 wird das Vlies 44 als Träger für eine metallische Beschichtung 58 verwendet. Beispielsweise enthält die Metallbeschichtung eine Aluminiumoberflächenbeschichtung durch thermisches Sprühen.

Bei allen Ausführungsformen wird nach Anordnung der Blitzschutzmaterialien die Deckschicht 40 durch Aufbringen des Decklackes 42 in flüssiger Form aufgebracht. Der Decklack 42 bettet die Blitzschutzmaterialanordnung 38 ein.

Im Folgenden werden die unterschiedlichen Ausführungsformen der Oberflächenstrukturen 30 anhand der einzelnen Figuren noch näher erläutert.

Die in Fig. 1 gezeigte erste Ausführungsform der Oberflächenstruktur 30 ist durch elektrostatisches Beflocken als Oberflächenbehandlung durchgeführt. Hierzu wird der Kleber 46, der leitend oder nicht leitend ausgeführt sein kann, punktuell aufgebracht, so dass sich die Klebstoffbereiche 50 ausbilden. An diesen Klebstoffbereichen werden die Kohlenstofffasern 42 oder Nanotubes fixiert, es wird ein elektrisches Feld zur Ausrichtung der Fasern oder Röhren angelegt und anschließend die Decklackbehandlung durchgeführt.

Dadurch entsteht ein Schichtsystem 32 aus der CFK-Struktur 36, dem Kohlenstoffvlies 44a, den Klebstoffbereichen 50 mit den Kurzfasern aus Kohlenstoff, die in die Deckschicht 40 eingebettet sind.

Die eingebetteten Kohlenstofffasern 52 oder Kohlenstoffnanoröhren bilden Blitzzündelemente 60. Diese Blitzzündelemente 60 können leitfähig mit dem Untergrund verbunden sein oder elektrisch von dem Untergrund getrennt sein.

Vorteile der in Fig. 1 gezeigten ersten Ausführungsform der Oberflächenstruktur 30 sind ein geringes Gewicht pro Flächeneinheit durch die Kohlenstofffasern 52, die Möglichkeit einer dreidimensionalen Formgebung, die nicht-korrosive Konstruktion, die Einbindung von Blitzzündelementen 60 mit oder ohne elektrische Verbindung, die Kompatibilität mit der Decklackbeschichtung und eine einfache Wartung der Oberflächen.

Optional kann eine leitfähige Grundfläche oder eine nicht leitfähige Grundfläche ausgeführt werden. Dies geschieht insbesondere durch Auswahl des Vlieses 44.

Bei der in Fig. 2 dargestellten zweiten Ausführungsform der Oberflächenstruktur 30 sind anstelle der Fasern als Blitzschutzelemente Splitter 54 verwendet. Der Kleber 46 ist flächig aufgetragen. Die durch die Splitter 54 gebildeten Blitzzündelemente 60 können mit oder ohne elektrisch leitfähiger Verbindung befestigt werden, je nach dem, ob ein leitfähiger Kleber 46 oder ein nicht leitfähiger Kleber 46 sowie ein leitfähiges Untergrundvlies 44a oder ein nicht leitfähiges Untergrundvlies 44b eingesetzt wird.

In dem Beispiel sind Si/SiC-Splitter anstatt CFK-Kurzfasern als Blitzzündelemente 60 verwendet. Diese Splitter 54 weisen Spitzen auf, die nach außen gerichtet sind und die Blitzzündung initiieren können.

Dementsprechend weist die zweite Ausführungsform folgendes Schichtsystem 32 auf: Als Untergrund ist die CFK-Struktur 36 vorgesehen, darauf ist optional das Kohlenstoffvlies 44a oder auch alternativ das Glasfaservlies 44b vorgesehen. Darüber befindet sich die Klebstoffschicht 48, mittels der die Splitter 54 fixiert sind. Die Splitter 54 sind in dem Decklack 42 eingebettet.

Vorteile dieser in Fig. 2 dargestellten Ausführüngsform sind unter anderem, dass das Schichtsystem 32 direkt auf eine Luftfahrzeugoberfläche, beispielsweise eine Flugzeugoberfläche, aufgebracht werden kann. Trägerartige Folien oder dergleichen sind nicht notwendig. Die Splitter 54 schaffen eine Blitzschutzeinrichtung 31 mit einer geringen Masse pro Flächeneinheit. Es ist eine dreidimensionale beliebige Formgebung möglich. Die Konstruktion ist insgesamt nicht korrosiv ausgeführt. Es können Blitzzündelemente 60 mit oder ohne elektrischer Verbindung vorgesehen werden. Die Konstruktion ist kompatibel mit der Decklackbeschichtung. Es ist nur eine geringe Wartung erforderlich. Auch hier können optional eine leitfähige Grundfläche oder eine nicht leitfähige Grundfläche ausgebildet werden.

Die in Fig. 3 dargestellte dritte Ausführungsform entspricht im Wesentlichen der in Fig. 2 dargestellten zweiten Ausführungsform mit dem Unterschied, dass eine geringere Anzahl von Splittern 54 vorgesehen ist, die somit nur punktuell oder bereichsweise und mit geringerem Flächengewicht in der Deckschicht 40 eingebettet sind.

Die in Fig. 4 dargestellte vierte Ausführungsform entspricht ebenfalls der in Fig. 2 dargestellten zweiten Ausführungsform mit dem Unterschied, dass der Kleber 46 nur bereichsweise zum Bilden der Klebstoffbereiche 50 angeordnet ist und dass auch die als Blitzzündelemente 60 vorgesehenen Splitter 54 entsprechend nur punktuell vorgesehen sind.

Bei der in Fig. 5 dargestellten fünften Ausführungsform ist die Blitzschutzmaterialanordnung 38 durch thermisches Sprühen ausgebildet. Hierzu werden beispielsweise Aluminiumpulver entsprechend geschmolzen und in noch flüssiger Form aufgesprüht. Das Vlies 44 wirkt als Schutzschicht zum Schützen der CFK-Struktur 36 und als Untergrund für die so ausgebildeten Metallstifte 56.

Es wird somit folgendes Schichtsystem 32 erreicht:
Die Tragstruktur 34 weist die CFK-Struktur 36 auf, auf der das Vlies 44, ausgebildet beispielsweise als Kohlenstoffvlies 44a oder als Glasfaservlies 44b, aufgebracht ist. Darauf sind die Metallstifte 56 zum Bilden der Blitzzündelemente 60 verteilt thermisch aufgesprüht. Über diese Blitzzündelemente 60 ist dann die Deckschicht 40 aufgebracht.

Vorteile der in Fig. 5 dargestellten fünften Ausführungsform sind im Folgenden wiedergegeben: Es ist eine beliebige dreidimensionale Formgebung möglich. Ein nicht-korrosives Vlies 44 dient als Träger für die Metallstifte 56. Die Konstruktion ist kompatibel mit einer Decklackbeschichtung 42. Es werden Blitzzündelemente 60 mit oder ohne leitfähiger Verbindung bereitgestellt. Die Oberfläche ist wartungsarm. Optional können eine leitfähige Grundfläche oder eine nicht leitfähige Grundfläche vorgesehen sein.

Auch bei der in Fig. 6 dargestellten sechsten Ausführungsform wirkt das Vlies 44 als Schutz der CFK-Struktur 36, so dass auf das Vlies 44 eine Metallschicht durch thermisches Sprühen aufgebracht werden kann. Alternativ können elektrisch leitfähige Matten mit unterschiedlichen Fasern und Binderoptionen vorgesehen werden.

Demnach ergibt sich folgendes Schichtsystem 32: Die Tragstruktur 34 weist die CFK-Struktur 36 auf, darauf ist das Vlies 44 angebracht, welches durch thermisches Sprühen, beispielsweise mit Aluminium oder sonstigem Metall beschichtet ist. Darüber ist der Decklack 22 angebracht.

Vorteile dieser Ausführungsform sind, dass eine beliebige dreidimensionale Formgebung möglich ist, dass ein nicht-korrosives Vlies 44 als Träger für eine metallische Beschichtung dient, dass die Konstruktion kompatibel mit der Decklackbeschichtung ist und dass die Oberfläche wartungsarm ist.

Bei allen Ausführungsformen kann die CFK-Struktur 36 aus einem kohlenstofffaserverstärkten Epoxidharz gebildet werden.

### Bezugszeichenliste:

- 10: Oberflächenstruktur
- 12: Schichtsystem
- 14: Tragstruktur
- 16: CFK-Struktur
- 18: Kupferdrahtnetz
- 20: Kunststoffmatrix
- 22: Decklack
- 30: Oberflächenstruktur
- 31: Blitzschutzeinrichtung
- 32: Schichtsystem
- 34: Tragstruktur
- 36: CFK-Struktur
- 38: Blitzschutzmaterialanordnung
- 40: Deckschicht
- 42: Decklack
- 43: Schutzschicht
- 44: Vlies
- 44a: Kohlenstoffvlies
- 44b: Glasfaservlies
- 46: Kleber
- 48: Klebstoffschicht
- 50: Klebstoffbereich
- 52: Kohlenstofffasern
- 54: Splitter
- 56: Metallstift
- 58: Metallbeschichtung
- 60: Blitzzündelement

## Patentansprüche

1. Verfahren zur Herstellung einer Oberflächenstruktur (30) mit Blitzschutzeinrichtung (31) mit dem Schritt:
a) Vorsehen einer Tragstruktur (34) auf der Basis eines Faserverbundwerkstoffs,
**gekennzeichnet durch** die Schritte:
b) Aufbringen einer Anordnung elektrisch leitfähiger Partikel (52, 54, 56) als Blitzzündelemente auf die Tragstruktur (34), so dass die Partikel in gewünschter Anordnung und Verteilung auf der Tragstruktur (34) lagefixiert anhaften, um eine Blitzschutzmaterialanordnung (38) aus oder mit einem leitenden Material zu bilden.
c) Aufbringen eines Deckmaterials (42) so, dass es die auf der Tragstruktur (34) lagefixierte wenigstens eine Blitzschutzmaterialanordnung (38) einbettet, und
d) Verfestigen des aufgebrachten Deckmaterials (42),
wobei die Partikel auf der Tragstruktur (34) vor dem Einbetten in das Deckmaterial (42) lagefixiert werden.

2. Verfahren nach Anspruch 1,
**dadurch gekennzeichnet,**
**dass** Schritt b) umfasst:
b1) Aufkleben der wenigstens einen durch die Partikel gebildeten Blitzschutzmaterialanordnung (38) mittels eines Klebers (46) auf der Tragstruktur.

3. Verfahren nach Anspruch 2,
**dadurch gekennzeichnet,**
**dass** Schritt b1) umfasst:
b1b) bereichsweises Auftragen des Klebers auf der Tragstruktur (34) zum Bilden von mehreren Klebebereichen (50) oder
b1c) punktuelles Auftragen des Klebers (46) auf der Tragstruktur (34).

4. Verfahren nach einem der Ansprüche 2 oder 3,
**dadurch gekennzeichnet,**
**dass** der in Schritt b1) aufzutragende Kleber (46) ein elektrisch leitfähiger Kleber ist.

5. Verfahren nach einem der voranstehenden Ansprüche,
**dadurch gekennzeichnet,**
**dass** die Partikel ausgewählt sind aus einer Gruppe, die
• Fasern,
• Kohlenstofffasern (52),
• Röhren,
• Nanoröhren,
• Splitter (54),
• SIC-Splitter,
• Graphitsplitter und
• Metallstifte (56),
umfasst.

6. Verfahren nach einem der voranstehenden Ansprüche,
**dadurch gekennzeichnet,**
**dass** Schritt b) umfasst:
Aufsprayen von Metallstiften (56) auf die Tragstruktur (34).

7. Verfahren nach Anspruch 6,
**dadurch gekennzeichnet,**
**dass** die Metallstifte (56) aus Metallpulver, insbesondere Aluminiumpulver, erzeugt werden.

8. Verfahren nach einem der voranstehenden Ansprüche,
**dadurch gekennzeichnet,**
**dass** Schritt a) die Herstellung eines flächigen Bauteilsubstrats aus einem CFK-Verbundmaterial, insbesondere aus einen mit Kohlenstofffasern verstärkten Epoxidharz, umfasst.

9. Verfahren nach einem der voranstehenden Ansprüche,
**dadurch gekennzeichnet,**
**dass** die Tragstruktur (14) vor Schritt b) auf der mit der Blitzschutzmaterialanordnung zu versehenenden Oberfläche mit einem Vlies (44) aus leitenden und/oder nichtleitenden Fasern als Zwischenlage zwischen dem Faserverbundmaterial und der Blitzschutzmaterialanordnung versehen wird.

10. Fahrzeugbauteilherstellverfahren zum Herstellen eines Bauteils eines Fahrzeugs, insbesondere eines Luftfahrzeugs, **gekennzeichnet durch** Durchführen eines Verfahrens nach einem der voranstehenden Ansprüche zum Bilden einer Oberflächenstruktur (30) des Bauteils.

11. Oberflächenstruktur (30), insbesondere für ein Luftfahrzeug, herstellbar mit einem Verfahren nach einem der Ansprüche 1 bis 9.

12. Fahrzeugbauteil, insbesondere Luftfahrzeugbauteil, enthaltend eine Oberflächenstruktur (30) nach Anspruch 11.

## Claims

1. Method for producing a surface structure (30) with a lightning protection device (31), having the step of:
a) providing a supporting structure (34) based on a fibre composite material,
**characterized by** the steps of:
b) applying an arrangement of electrically conductive particles (52, 54, 56) as lightning initiator elements on the supporting structure (34) such that the particles adhere on the supporting structure (34) in a fixed position and in a desired arrangement and distribution, so as to form a lightning protection material arrangement (38) of or with a conductive material,
c) applying a cover material (42) such that it embeds the at least one lightning protection material arrangement (38) fixed in place on the supporting structure (34), and
d) fixing the applied cover material (42),
wherein the particles are fixed in place on the supporting structure (34) before being embedded in the cover material (42).

2. Method according to Claim 1,
**characterized in that**
step b) includes:
b1) adhesively bonding the at least one lightning protection material arrangement (38), which is formed by the particles, to the supporting structure by means of an adhesive (46).

3. Method according to Claim 2,
**characterized in that**
step b1) includes:
b1b) applying the adhesive in certain regions on the supporting structure (34) to form multiple adhesion regions (50) or
b1c) applying the adhesive (46) at certain points on the supporting structure (34).

4. Method according to either of Claims 2 and 3,
**characterized in that**
the adhesive (46) to be applied in step b1) is an electrically conductive adhesive.

5. Method according to one of the preceding claims,
**characterized in that**
the particles are chosen from a group which includes:
• fibres,
• carbon fibres (52),
• tubes,
• nanotubes,
• splinters (54),
• SiC splinters,
• graphite splinters and
• metal rods (56).

6. Method according to one of the preceding claims,
**characterized in that**
step b) includes:
spraying metal rods (56) onto the supporting structure (34).

7. Method according to Claim 6,
**characterized in that**
the metal rods (56) are generated from metal powder, in particular aluminium powder.

8. Method according to one of the preceding claims,
**characterized in that**
step a) includes the production of a planar component substrate made of a CFRP composite material, in particular of an epoxy resin reinforced with carbon fibres.

9. Method according to one of the preceding claims,
**characterized in that**,
prior to step b), the supporting structure (34) is provided, on the surface to be provided with the lightning protection material arrangement, with a nonwoven (44) made of conductive and/or insulating fibres as an intermediate layer between the fibre composite material and the lightning protection material arrangement.

10. Vehicle component production method for producing a component of a vehicle, in particular an aircraft, **characterized by** carrying out a method according to one of the preceding claims for forming a surface structure (30) of the component.

11. Surface structure (30), in particular for an aircraft, which can be produced by a method according to one of Claims 1 to 9.

12. Vehicle component, in particular an aircraft component, comprising a surface structure (30) according to Claim 11.

## Revendications

1. Procédé de production d'une structure de surface (30) munie d'un dispositif de protection contre la foudre (31) comprenant l'étape suivante:
a) prévoir une structure portante (34) à base d'un matériau composite en fibres,
**caractérisé par** les étapes suivantes:
b) déposer un agencement de particules électriquement conductrices (52, 54, 56) comme éléments d'allumage d'éclair sur la structure portante (34), de telle manière que les particules adhèrent en position fixée, avec une disposition et une distribution souhaitées sur la structure portante (34), afin de former un agencement de matière de protection contre la foudre (38) en ou avec une matière conductrice,
c) déposer une matière de recouvrement (42) de telle manière qu'elle enrobe ledit au moins un agencement de matière de protection contre la foudre (38) fixé en position sur la structure portante (34), et
d) solidifier la matière de recouvrement déposée (42), dans lequel on fixe les particules en position sur la structure portante (34) avant l'enrobage dans la matière de recouvrement (42).

2. Procédé selon la revendication 1, **caractérisé en ce que** l'étape b) comprend l'opération suivante:
b1) coller ledit au moins un agencement de matière de protection contre la foudre (38) formé par les particules au moyen d'une colle (46) sur la structure portante.

3. Procédé selon la revendication 2, **caractérisé en ce que** l'étape b1) comprend l'opération suivante:
b1b) déposer la colle par zones sur la structure portante (34) pour former plusieurs zones de collage (50), ou
b1c) déposer la colle (46) sous forme ponctuelle sur la structure portante (34).

4. Procédé selon l'une des revendications 2 ou 3, **caractérisé en ce que** la colle (46) à déposer à l'étape b1) est une colle électriquement conductrice.

5. Procédé selon l'une quelconque des revendications précédentes, **caractérisé en ce que** les particules sont choisies dans un groupe qui comprend:
• des fibres,
• des fibres de carbone (52),
• des tubes,
• des nanotubes,
• des éclats (54),
• des éclats de SiC,
• des éclats de graphite, et
• des tiges métalliques (56).

6. Procédé selon l'une quelconque des revendications précédentes, **caractérisé en ce que** l'étape b) comprend l'opération suivante:
pulvériser des tiges métalliques (56) sur la structure portante (34).

7. Procédé selon la revendication 6, **caractérisé en ce que** les tiges métalliques (56) sont produites à partir de poudre de métal, en particulier de poudre d'aluminium.

8. Procédé selon l'une quelconque des revendications précédentes, **caractérisé en ce que** l'étape a) comprend la production d'un substrat de composant plat en un matériau composite CFK, en particulier en une résine époxyde renforcée par des fibres de carbone.

9. Procédé selon l'une quelconque des revendications précédentes, **caractérisé en ce que** la structure portante (34) est munie, avant l'étape b), sur la surface à munir de l'agencement de matière de protection contre la foudre, d'un non-tissé (44) en fibres conductrices et/ou non conductrices en tant que couche intermédiaire entre le matériau composite en fibres et l'agencement de matière de protection contre la foudre.

10. Procédé de production de composants de véhicule pour la production d'un composant de véhicule, en particulier d'un véhicule aérien, **caractérisé par** l'exécution d'un procédé selon l'une quelconque des revendications précédentes pour former une structure de surface (30) du composant.

11. Structure de surface (30), en particulier pour un véhicule aérien, pouvant être produite par un procédé selon l'une quelconque des revendications 1 à 9.

12. Composant de véhicule, en particulier composant de véhicule aérien, contenant une structure de surface (30) selon la revendication 11.
